Europäisches Patentamt

European Patent Office

Office européen des brevets

(19)

(11) Veröffentlichungsnummer : **0 085 731**
**B1**

(12) **EUROPÄISCHE PATENTSCHRIFT**

(45) Veröffentlichungstag der Patentschrift :
11.12.85

(21) Anmeldenummer : 82100965.1

(22) Anmeldetag : 10.02.82

(51) Int. Cl.⁴ : **B 32 B 17/02, E 04 C   2/24**

(54) Mineralfaserplatte.

(43) Veröffentlichungstag der Anmeldung :
17.08.83 Patentblatt 83/33

(45) Bekanntmachung des Hinweises auf die Patenterteilung : 11.12.85 Patentblatt 85/50

(84) Benannte Vertragsstaaten :
AT BE CH DE FR GB IT LI LU NL SE

(56) Entgegenhaltungen :
DE-A- 2 517 668
FR-A- 1 012 391
FR-A- 1 602 362
FR-A- 2 047 708
GB-A-   619 674
GB-A-   918 647
GB-A-   978 119
US-A- 2 834 702
US-A- 3 345 241

(73) Patentinhaber : FIBRACONSULT MANAGEMENT UND
BERATUNGS AG
Niklaus-Konrad-Strasse 25
CH-4500 Solothurn (CH)

(72) Erfinder : Wetterwald, Anton
Haffnerstrasse 14
CH-4504 Solothurn (CH)
Erfinder : Abrassart, Jacques
63, Rue d'Offignies
B-7270 Dour (BE)
Erfinder : Moreau, Max
Avenue des fleurs 1
B-7270 Dour (BE)
Erfinder : Dallemagne, Stanislas
Rue des Croix du Feu 33
B-7000 Mons (BE)

(74) Vertreter : EGLI-EUROPEAN PATENT ATTORNEYS
Horneggstrasse 4
CH-8008 Zürich (CH)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Mineralfaserplatte mit in bevorzugter Richtung orientierten Fasern.

Derartige Mineralfaserplatten finden vorwiegend als Baustoffe Verwendung. Ihr Hauptbestandteil sind Mineralfasern, beispielsweise aus Glas, Gestein, Schlacke, Keramik u. dgl. Zusammen mit anderen Bestandteilen werden diese Mineralfasern unter Anwendung bekannter Verfahren zu Platten geformt, bei denen, bedingt durch das Herstellungsverfahren, die Mineralfasern eine bevorzugte Orientierung einnehmen. Als bekannte Verfahren zur Herstellung derartiger Mineralfaserplatten gelten beispielsweise das Nassbahnverfahren, auch Wetfelt-Verfahren genannt, ähnlich einem bei der Papierherstellung verwendeten Verfahren, sowie ein Verfahren zur Herstellung von Platten aus einer streichfähigen Masse in Formen (sog. « cast tiles »). Es ist ferner bekannt, derartige Mineralfaserplatten zu beschichten oder mit einer geprägten Oberflächenstruktur und mit Farbe als Dekor zu versehen, um einerseits ein besseres Aussehen zu erreichen, wenn die Platten als Trennwand oder als Deckenplatte verwendet werden sollen, und um andererseits bessere akustische Dämpfung zu erreichen. Für verschiedene Anwendungsfälle, insbesondere als qualitativ hochwertige Deckenplatten oder als Akkustikplatten weisen die bekannten Mineralfaserplatten jedoch nicht immer befriedigende mechanische Festigkeitseigenschaften auf. So ist die Biegezugfestigkeit vor allem bei gegossenen Platten nur ungenügend, weshalb die Platten während des Transports oder während der Montage sehr leicht brechen. Ein weiterer Nachteil bekannter Platten besteht darin, dass sie sich bei höherer Luftfeuchtigkeit relativ stark durchbiegen können und Deckenplatten sich im Grenzfall aus der Aufhängevorrichtung lösen und zu Boden fallen können. Damit diese Nachteile nicht allzugross ins Gewicht fallen, werden bekannte Mineralfaserplatten z. B. als Deckenplatten nur in relativ kleinen Formaten angeboten, wodurch sich die Montage wegen aufwendiger Stützvorrichtungen und wegen des erheblichen Arbeitszeitbedarfs verteuert.

Aufgabe der im Anspruch 1 angegebenen Erfindung ist es, die mechanische Festigkeit so zu verbessern, dass die Masshaltigkeit auch bei hoher Luftfeuchtigkeit gewährleistet ist und dass die Platten eine bessere Biegezugfestigkeit aufweisen, so dass sie in grösseren Formaten als bisher möglich hergestellt und verarbeitet werden können.

Der Vorteil der Erfindung ist darin zu sehen, dass die Biegezugfestigkeit der Mineralfaserplatte etwa verdoppelt wird, wodurch sich eine bessere und einfachere Handhabung für die Platten ergibt. Ferner wird die Masshaltigkeit, insbesondere unter Feuchtigkeitseinflüssen, entschieden verbessert. Ein weiterer Vorteil besteht darin, dass z. B. durch geeignete Kombination von verschiedenen Plattenschichten das Brandverhalten der ganzen Platte als Baustoff verbessert wird.

Im folgenden werden bevorzugte Ausführungsbeispiele der Erfindung anhand von Zeichnungen näher erläutert. Es zeigen :

Figur 1   die perspektivische Ansicht einer als Beispiel gewählten Deckenplatte,

Figur 2   einen Teilschnitt der Deckenplatte gemäss Fig. 1, und

Figur 3   eine schematisch dargestellte Vorrichtung zur Erläuterung des erfindungsgemässen Herstellungsverfahrens.

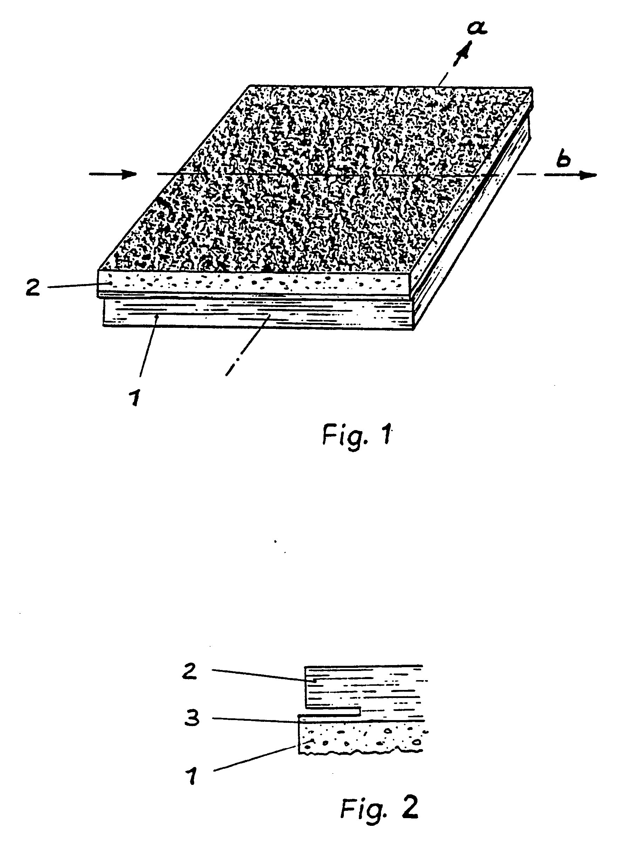

Die in den Fig. 1 und 2 als Beispiel gezeigte Deckenplatte stellt einen Verbund dar aus einer Basisplatte 1 und einer zweiten Plattenschicht 2. Die Basisplatte 1 besteht im Beispiel zu mehr als 50 Gew.-% aus Mineralwolle, deren Fasern vorzugsweise in Richtung a gemäss Fig. 1 orientiert sind. Die Orientierung erfolgt während des an sich bekannten Herstellungsprozesses, bei welchem die Materialeingabe auf ein laufendes Transportband erfolgt, so dass sich die erwähnte Orientierung der Fasern einstellt. Weitere Bestandteile der Basisplatte sind : Ton oder andere Füllstoffe : 10 bis 15 Gew.-%, Altpapier oder andere organische Fasern : 5 bis 10 Gew.-% und Stärke : 5 bis 10 Gew.-%, wobei alle Prozentangaben auf die Trockenmasse bezogen sind. Die zweite Plattenschicht 2, welche über eine Grenzschicht 3 mit der Basisplatte 1 verbunden ist, enthält als Hauptbestandteil ebenfalls Faserprodukte (im Beispiel mindestens 50 Gew.-%) sowie neben anderen Bestandteilen Stärke als Bindemittel, vorzugsweise in einem Anteil zwischen 5 und 10 Gew.-% und 10 bis 15 Gew.-% Ton. Auch die zweite Plattenschicht 2 weist eine bevorzugte Orientierungsrichtung ihrer Fasern auf, wie dies durch den Pfeil b in Fig. 1 angedeutet ist. Dabei liegt die Richtung der Orientierung b für die zweite Plattenschicht quer zur Orientierung a der Basisplatte 1. Im gezeigten Beispiel schliessen beide Richtungen einen Winkel von 90° ein.

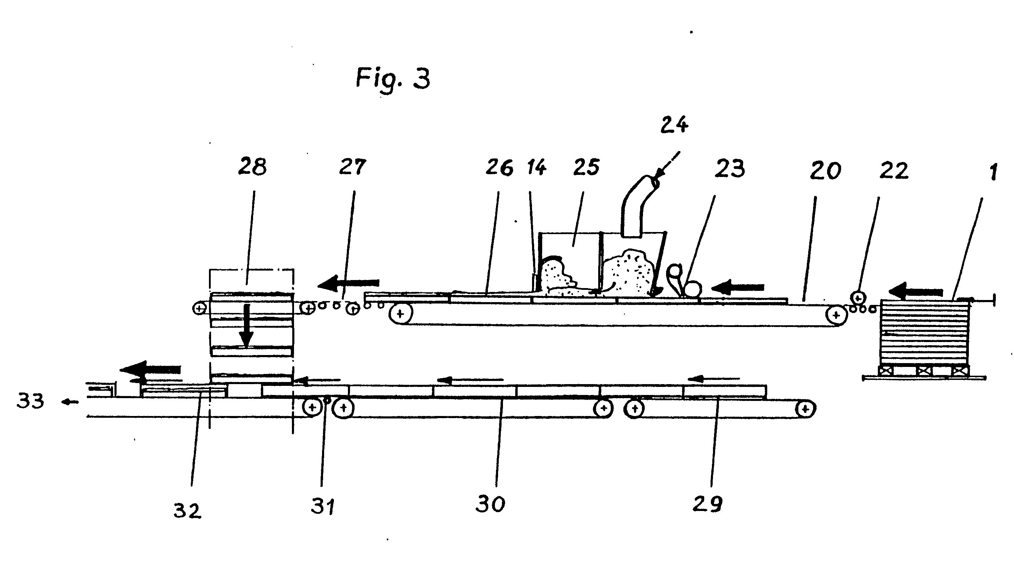

Anhand von Fig. 3 wird die Herstellung derartiger Platten im folgenden näher beschrieben. Vorgefertigte, trockene Basisplatten 1 werden direkt vom Transportstapel auf ein Transportband 20 gefördert. Dabei werden die Platten von einer Vorschubeinrichtung 22 derart auf das Transportband 20 geschoben, dass die Basisplatten ohne Zwischenraum hintereinander liegen. Beim Aufsetzen der Basisplatten 1 auf das Transportband 20 ist besonders darauf zu achten, dass die bevorzugte Faserrichtung a gemäss Fig. 1 quer zur Vorschubrichtung auf dem Transportband 20 verläuft. Die Platten passieren eine Reinigungsvorrichtung 23, die im Beispiel aus einer Reinigungsrolle und einer Absaugeinrichtung besteht. Die nun gereinigten Platten erreichen eine Auftragsstation 25, in welcher die trockenen Basisplatten 1 mit einer schlamm- oder breiartigen feuchten Masse versehen werden. Diese Masse, welche über eine Zuführung 24 der Auftragsstation 25 zugeführt wird, enthält, wie oben für die zweite Plattenschicht 2 angegeben, als Hauptbestandteil Faserprodukte. Am Ausgang der Auftragsstation 25 ist eine Rakel 14 angeordnet, mit deren Hilfe die Dicke der auf die Basisplatten aufgetragenen Schicht

2

bestimmt wird. Durch die Ausbildung bzw. Bewegung der Rakelkante lässt sich die Oberflächenstruktur der aufgetragenen pastösen Masse bestimmen.

Nach Verlassen der Auftragsstation 25, im Endbereich 26 des Transportbandes 20, sind die Basisplatten 1 mit einer Fasermasse beschichtet, deren bevorzugte Orientierung quer zu derjenigen der Basisplatten 1 verläuft.

Die in der Auftragsstation 25 auf die trockenen Basisplatten 1 kontinuierlich aufgebrachte nasse, streichfähige Masse verbindet sich durch das Eindringen von Stärkelösung an der Grenzschicht 3 gemäss Fig. 2 unlösbar mit der Basisplatte 1.

Mit Hilfe einer zweiten Vorschubeinrichtung 27 werden die beschichteten Platten getrennt einem Lift 28 zugeführt und in darunter befindliche Tragformen 29 abgesenkt. Diese Tragformen werden mit Hilfe eines Formentransportbandes 30 herangeführt. Durch eine Positioniereinrichtung 31 wird jeweils eine freie Tragform unter eine im Lift 28 ankommende Platte geschoben. Sobald die Form unter der Platte ist, wird die Platte in die Form abgesenkt. Daraufhin verlässt die in der Form befindliche Platte 32 die Einrichtung, um später einem Trockenofen 33 zugeführt zu werden. Die mit pastöser Masse beschichteten Platten können aber auch quer auf einem kombinierten Transportband oder auf einer Rollenbahn mit bombierten Rollen kontinuierlich dem Trockenprozess zugeführt werden.

Ein anschliessender Trocknungsprozess erstreckt sich über mehrere Stunden, bei Maximaltemperaturen von ca. 150 °C. Im bevorzugten Ausführungsbeispiel stieg die Temperatur jeweils pro Stunde von 90 °C über 120, 140 auf 155 °C, blieb bei dieser Temperatur für 1 2/2 Stunden und wurde während 4 1/2 Stunden auf 60 °C abgesenkt. Die während des Trocknungsprozesses auftretenden Zugspannungen und damit verbundenen Verformungen (Schüsselbildungen) wurden dadurch aufgefangen, dass die Tragformen 29 um ca. 0,6 % negativ gekrümmt waren. Im bevorzugten Beispiel betrug die Sehnenhöhe einer Form mit 635 mm Breite zwischen 3 und 4 mm. Nach Abschluss des Trocknungsprozesses verliessen die so gebildeten Verbundplatten absolut eben den Trockenofen 33.

Auf diese Weise hergestellte Mineralfaser-Verbundplatten im Format 30 cm × 30 cm lieferten folgende Messergebnisse im Vergleich zu einfachen Mineralplatten, wobei die Dicke der Basisplatte 1 13 mm und die der zweiten Plattenschicht 8 mm betrug ; nach dem Trocknen der Verbundplatte wurde durch teilweises Abfräsen der Basisplatte auf der Rückseite eine Gesamtdicke von 19 mm eingestellt, da die Vergleichsplatte ebenfalls eine Dicke von 19 mm hatte. Die Vergleichszahlen für die einfache Platte stehen dabei in Klammern :

1. Biegezugfestigkeit : 9 kp/cm$^2$ (4 kp/cm$^2$) $\cong$ 0,88 MPa (0,39 MPa)

2. Produktionsverluste durch Kantenbruch : 0,95 % (5 %)

3. Klimatest : bei 90 % relativer Luftfeuchtigkeit betrug die Durchbiegung in Längsrichtung nach 4 Wochen 0,09 mm (Vergleichsplatte nach 2 Wochen : 1,2 mm). Bei 95 % relativer Luftfeuchtigkeit nach 72 Stunden stellte sich eine Durchbiegung von 0,14 mm ein (Vergleichsplatte : Durchbiegung 2,27 mm).

Obwohl im bevorzugten Ausführungsbeispiel der Verbund einer festen Basisplatte mit einer pastös aufgetragenen zweiten Plattenschicht beschrieben wurde, lassen sich ähnlich gute Ergebnisse mit Verbundplatten erzielen, die aus zwei oder mehreren aufeinander laminierten Plattenschichten bestehen, wobei jeweils die bevorzugten Faserrichtungen aufeinanderfolgender Platten gekreuzt zueinander liegen. So wurden Verbundplatten aus gekreuzten trockenen Basisplatten 1 hergestellt, welche ähnlich gute Eigenschaften wie die als Ausführungsbeispiel beschriebene Platte aufweisen.

Besonders gute Ergebnisse wurden erzielt, wenn die pastöse Masse für die zweite Plattenschicht 2 folgende Zusammensetzung aufwies : Faserprodukt : ca. 75 %, Kaolin : ca. 13 %, Stärke : ca. 10 % sowie Guar-Gummi, Phenolharz und Silikon. Es können auch relativ geringe Mengen anderer Stoffe zugegeben werden, welche als Verdickungsmittel, Dispergiermittel oder zur Verbesserung der Wasserresistenz dienen.

Eine pastöse Masse, wie sie als Bestandteil der zweiten Plattenschicht angegeben ist, lässt sich auch direkt, ohne Verwendung einer nach dem Wetfelt-Verfahren hergestellten Basisplatte durch mehrmalige Anwendung des beschriebenen Verfahrens zu einer Verbundplatte mit gekreuzt orientierten Faserschichten verarbeiten. Auch eine solche Verbundplatte weist bessere Eigenschaften auf als bekannte Platten dieser Art.

Derartig hergestellte Platten eignen sich vorzüglich als Wand- oder Deckenplatten, da sie eine gute Mass- und Formhaltigkeit aufweisen. Solche Platten lassen sich in den gewünschten Formaten ohne wesentliche Einschränkungen im Hinblick auf mögliche Massänderungen herstellen und verarbeiten. Bei der Lagerhaltung, dem Transport und der Montage der Platten ist die Bruchgefahr entscheidend herabgesetzt.

Durch Wahl von geeigneten Profilen und Bewegungen für die Rakelkante beim Auftragen der pastösen Masse und durch an sich bekannte Präge- und Saugtechniken lassen sich vielfältige Oberflächenmuster und Strukturen herstellen. Eine weitere Vielfalt lässt sich durch Nachbearbeitung der Plattenoberfläche, z. B. durch Schleifen oder Fräsen, erreichen.


**Patentansprüche**

1. Verfahren zur Herstellung von Mineralfaserplatten mit in bevorzugter Richtung orientierten

3

Fasern, welche aus einem Verbund einer ersten Plattenschicht (1) mit mindestens einer zweiten Plattenschicht (2) bestehen, wobei die bevorzugten Faserrichtungen aufeinanderfolgender Plattenschichten gekreuzt zueinander verlaufen, dadurch gekennzeichnet, dass eine erste Basisschicht mit einer bevorzugten Faserrichtung auf einem Transportband (20) durch eine Auftragstation (25) geleitet wird, wobei auf die Oberfläche der Basisschicht (1) eine pastöse faserhaltige Masse mit quer zur bevorzugten Faserrichtung der Basisschicht verlaufenden Hauptfaserrichtung aufgetragen wird, welche die zweite Plattenschicht (2) bildet, und dass der entstehende Verbund (1, 2) einem anschliessenden Trockenprozess unterworfen wird.

2. Verfahren nach Anspruch 1, dadurch gekennzeichnet, dass den Plattenschichten (1, 2) neben Mineralfaserprodukten als Hauptbestandteil und neben weiteren Bestandteilen organische oder anorganische Bindemittel mit einem Gewichtsanteil zwischen 5 und 10 % der Trockenmasse zugegeben werden, und dass die Verbindung der Plattenschichten über eine Bindemittelbrücke, vorzugsweise aus Stärke, an der Grenzschicht (3) zwischen benachbarten Plattenschichten (1, 2) erfolgt.

3. Verfahren nach Anspruch 1, dadurch gekennzeichnet, dass mindestens der zweiten Plattenschicht (2) als weitere Bestandteile etwa zwischen 5 und 45 Gewichtsprozent Füllstoffe und demgegenüber geringe Mengen Verdickungsmittel, Dispergiermittel und Zuschläge zur Verbesserung der Wasserresistenz zugegeben werden.

4. Verfahren nach Anspruch 1, dadurch gekennzeichnet, dass vorfabrizierte Basisplatten (1) ohne Zwischenraum aneinanderstossend auf einem bewegten Transportband (20) geführt werden, wobei die bevorzugte Fasernrichtung quer zur Transportrichtung des Bandes (20) verläuft und dass in der nachfolgenden Auftragstation (25) die pastöse, faserhaltige Masse auf die Oberfläche der durchlaufenden Basisplatten aufgetragen wird, wobei sich die Fasern der Masse vorwiegend in Bewegungsrichtung des Transportbandes ausrichten.

5. Verfahren nach einem der Ansprüche 1 bis 4, dadurch gekennzeichnet, dass der Verbund (1, 2) in vorbombierten Tragformen (29) einzeln einem Trockenofen (33) zugeführt werden.

6. Verfahren nach Anspruch 5, dadurch gekennzeichnet, dass die Temperatur im Trockenofen (33) jeweils pro Stunde von etwa 90 °C auf etwa 120 °C, etwa 140 °C bis auf etwa 155 °C erhöht wird, dass die Temperatur für etwa 1,5 Stunden auf diesem Wert gehalten wird und dann während etwa 4,5 Stunden auf 60 °C abgesenkt wird.

7. Verfahren nach einem der Ansprüche 1 bis 4, dadurch gekennzeichnet, dass der Verbund in Querrichtung auf einem bombierten Transportband oder einer Rollenbahn mit bombierten Rollen kontinuierlich dem Trockenprozess zugeführt werden.

8. Vorrichtung zur Durchführung des Verfahrens nach Anspruch 5, dadurch gekennzeichnet, dass der Boden der Tragform (29) um 0,5 bis 1 % vorbombiert ist.

9. Mineralfaserplatte, hergestellt nach einem der Ansprüche 1 bis 7, dadurch gekennzeichnet, dass mindestens als erste Plattenschicht (1) eine vorfabrizierte Basisplatte vorgesehen ist, welche als weitere Bestandteile zwischen 10 und 15 Gewichtsprozent Füllstoffe und 5 bis 10 Gewichtsprozent organische Fasern enthält.

**Claims**

1. A process for producing mineral fiber boards having fibers oriented in a preferential direction, said boards consisting of a bonded combination of a first board layer (1) and at least a second board layer (2), the preferential directions of successive board layers being arranged crosswise with respect to each other, characterized in that a first base layer having a preferential direction of fibers is conveyed on a conveyor belt (20) through an application station (25), whereby a pasty, fibrous mass forming the second board layer (2) is applied on the surface of the base layer (1) with its predominant direction of fibers perpendicular to the preferential direction of fibers of the base layer, and that the resulting composite board (1, 2) is then subjected to a drying process.

2. A process according to claim 1, characterized in that, besides mineral fiber products constituting a main component and besides other components, organic or inorganic binder materials are added to the board layers (1, 2) in a weight proportion between 5 and 10 % of the dry mass, and that the bond between the board layers is effected by means of a bridge of binder material, especially of starch, located at the interface layer (3) between adjacent board layers (1, 2).

3. A process according to claim 1, characterized in that there are added at least to the second board layer (2) as further components between about 5 and 45 % by weight of filler materials and, relative to this quantity, small amounts of thickeners, dispersing agents and water resistance improving additives.

4. A process according to claim 1, characterized in that prefabricated base boards (1) are conveyed on a moving conveyor (20) in serial contiguous manner with no intervening gaps, the preferential fiber direction being transverse to the direction of conveyance of the conveyor (20), and that in the following application station (25) the pasty, fibrous mass is applied on the surface of the conveyed through base boards, whereby the fibers of the mass are aligned preponderantly with the direction of conveyance.

5. A process according to any one of claims 1 to 4, characterised in that the composite boards (1, 2) are conveyed individually in convex supporting forms (29) to a drying oven (33).

4

# 0 085 731

6. A process according to claim 5, characterized in that the temperature of the drying oven (33) is increased at hourly intervals from about 90 °C to about 120 °C, to about 140 °C and then to about 150 °C, maintained at this value for about 1,5 hours and then reduced to about 60 °C over a period of about 4,5 hours.

7. A process according to any one of claims 1 to 4, characterized in that the composite boards are continuously conveyed to the drying process on a convex belt conveyor or a roller conveyor having convex rollers.

8. A device for performing the process according to claim 5, characterized in that the bottom of the supporting form (29) is curved to between 0,5 to 1 %.

9. A mineral fiber board produced according to any one of claims 1 to 7, characterized in that a prefabricated base board containing as further components between 10 and 15 % by weight of fillers and 5 to 10 % by weight of organic fibers is provided at least as the first board layer (1).

**Revendications**

1. Procédé de production de plaques formées de fibres minérales et dont les fibres sont orientées dans une direction préférentielle, ces plaques consistant en un matériau composite fait d'une première couche de plaques (1) et d'au moins une deuxième couche de plaques (2), la direction préférentielle de couches successives de plaques étant disposée de manière croisée les unes par rapport aux autres, caractérisé en ce qu'une première couche de base présentant une direction préférentielle de fibres est transportée sur un tapis d'un convoyeur (20) à travers une station d'application (25), une masse pâteuse et fibreuse formant la deuxième couche de plaques (2) étant appliquée sur la surface de la couche de base (1) de telle sorte que sa direction prédominante de fibres soit perpendiculaire à la direction préférentielle de fibres de la couche de base, et en ce que la plaque composée résultante (1, 2) est ensuite soumise à un processus de séchage.

2. Procédé selon la revendication 1, caractérisé en ce que, outre les produits de fibres minérales constituant un composant principal et outre d'autres composants, on ajoute aux couches de plaques (1, 2) des matériaux liants organiques ou anorganiques dans une proportion en poids comprise entre 5 et 10 % de la masse sèche, et en ce que la liaison entre les couches de plaques est réalisée au moyen d'un pont de matériau liant, particulièrement d'amidon, situé à la couche d'interface (3) entre des couches de plaques voisines (1, 2).

3. Procédé selon la revendication 1, caractérisé en ce que l'on ajoute au moins à la deuxième couche de plaques (2) en tant qu'autres composants entre 5 et 45 % en poids de matériaux de remplissage et, par rapport à cette quantité, de petites quantités d'agents épaississeurs, dispersants et renforçateurs de la résistance à l'eau.

4. Procédé selon la revendication 1, caractérisé en ce que des plaques de base préfabriquées (1) sont transportées sur un convoyeur en déplacement (20) de façon contiguë sans intervalles entre elles, la direction préférentielle de fibres étant disposée transversalement par rapport à la direction de transport du convoyeur (20), et en ce qu'à la station d'application suivante (25) la masse pâteuse et fibreuse est appliquée sur la surface des plaques de base en transit, les fibres de la masse étant de façon prépondérante alignées avec la direction de transport.

5. Procédé selon l'une des revendications 1 à 4, caractérisé en ce que les plaques composées (1, 2) sont transportées individuellement dans des formes porteuses convexes (29) vers un four de séchage (33).

6. Procédé selon la revendication 5, caractérisé en ce que la température du four de séchage (33) est élevée à intervalles d'une heure depuis environ 90 °C jusqu'environ 120 °C, puis environ 140 °C et ensuite environ 150 °C, maintenue à cette valeur pendant environ 1,5 heure et ensuite réduite à environ 60 °C en 4,5 heures environ.

7. Procédé selon l'une des revendications 1 à 4, caractérisé en ce que les plaques composées sont transportées de façon continue vers le processus de séchage sur un convoyeur à tapis convexe ou sur un convoyeur à rouleaux présentant des rouleaux convexes.

8. Dispositif pour mettre en œuvre le procédé selon la revendication 5, caractérisé en ce que le fond de la forme porteuse (29) présente une courbure anticipée de 0,5 à 1 %.

9. Plaque formée de fibres minérales fabriquée selon l'une des revendications 1 à 7, caractérisée en ce qu'au moins comme première couche de plaques (1) il est prévu une plaque de base préfabriquée contenant comme autres composants entre 10 et 15 % en poids de matériaux de remplissage et 5 à 10 % en poids de fibres organiques.

5

Fig. 1

Fig. 2

1

Fig. 3